# EUROPEAN PATENT APPLICATION

(11) **EP 4 723 605 A1**
(43) Date of publication of application: **08.04.2026**
(21) Application number: 25205717.9
(22) Date of filing: 30.09.2025
(51) Int. Cl.: H04M 1/72

(54) **METHODS AND SYSTEMS FOR CONTROLLING MOBILE DEVICE NOTIFICATIONS**

(30) Priority: 30.09.2024 US 202418902204
(71) Applicant: Cambridge Mobile Telematics Inc., Cambridge, MA 02142 (US)
(72) Inventor: Balakrishnan, Hari, Belmont, MA (US)
(74) Representative: Mewburn Ellis LLP

(57) **Abstract**

Techniques for optimizing driving alerts provided by a computing device are presented herein. In some techniques, a driving alert management server system transmits an initial set of alert rules to a driver safety application executing on a computing device and receives an alert history from the application including alerts provided to a user in response to detecting occurrences of one or more types of driving events according to the initial set of alert rules. A likelihood that the user will disable future alerts is generated by executing a user-chum machine learning model on the alert history and compared to predefined churn threshold criteria. Based on the comparison, the initial alert rules are modified to generate a new set of alert rules that optimize the likelihood, and the new set of alert rules are transmitted to the application.

## Description

### BACKGROUND OF THE INVENTION

An ever increasing number of applications are being developed and installed on mobile phones resulting in an escalating battle for user attention. To help capture a user's attention, many applications turn to notifications and alerts. While some notifications may be intended to drive engagement with a source application, other notifications may be designed to prompt a user to engage with their surroundings in a different manner, such as by reminding a user to stand up after being sedentary for an extended period of time or alerting the user to potentially unsafe activities. The ever improving suite of mobile phone sensors, whose data can be used to evaluate the surrounding environment and the mobile phone's relationship thereto, can enable many possibilities for detecting when the user of the mobile phone is riding in a vehicle, as well as the movements of the vehicle. As a result, insights into potentially unsafe driving tendencies of the person operating the vehicle may be obtained and provided to the person as feedback for improvement. However, due to the ever growing number of alerts generated by an equally increasing number of applications, there is a need in the art for improved methods and systems for managing the delivery of alerts by mobile devices.

### SUMMARY OF THE INVENTION

In some embodiments, a method comprises transmitting, by a driving alert management server system, an initial set of alert rules to a driver safety application executing on a computing device, wherein the initial set of alert rules cause the driver safety application to provide alerts to a user in response to detecting occurrences of one or more types of driving events. The method may further comprise receiving, by the driving alert management server system, an alert history from the driver safety application, the alert history comprising information about a set of alerts provided to the user in accordance with the initial set of alert rules. The method may further comprise executing, by the driving alert management server system, a user-chum machine learning model on the alert history to generate a likelihood that the user will disable future alerts caused by the initial set of alert rules. The method may further comprise comparing, by the driving alert management server system, the likelihood with predefined churn threshold criteria. The method may further comprise generating, by the driving alert management server system, a new set of alert rules to optimize the likelihood by modifying the initial set of alert rules based on comparing the likelihood with the predefined churn threshold criteria. The method may further comprise transmitting, by the driving alert management server system, the new set of alert rules to the driver safety application.

In some embodiments, generating the new set of alert rules to optimize the likelihood comprises iteratively generating a modified set of alert rules based on the initial set of alert rules or a previous iteration of the modified set of alert rules; generating an updated likelihood that the user will disable future alerts caused by the modified set of alert rules; and comparing the updated likelihood with the predefined churn threshold criteria. In some embodiments, generating the updated likelihood comprises generating a synthetic alert history that includes a subset of alerts from the alert history and excludes alerts from the alert history that do not conform to the modified set of alert rules; and executing the user-churn machine learning model on the synthetic alert history to generate the updated likelihood. In some embodiments, iteratively generating the modified set of alert rules comprises setting a lower bound based on the initial set of alert rules or the previous iteration of the modified set of alert rules; setting an upper bound based on a predefined set of alert rules; and identifying the modified set of alert rules from a midpoint between the lower bound and the upper bound.

In some embodiments, the predefined churn threshold criteria comprise a minimum churn threshold wherein, in response to determining that the likelihood is less than the minimum churn threshold, the new set of alert rules cause the driver safety application to provide alerts to the user more frequently compared to the initial set of alert rules. In some embodiments, the predefined churn threshold criteria comprise a maximum churn threshold wherein, in response to determining that the likelihood is greater than the maximum churn threshold, the new set of alert rules cause the driver safety application to provide alerts to the user less frequently compared to the initial set of alert rules.

In some embodiments, the initial set of alert rules includes a minimum alert interval that causes the driver safety application to wait a predefined amount of time after providing an alert to the user before providing a subsequent alert to the user and generating the new set of alert rules comprises increasing or decreasing the predefined amount of time. In some embodiments, the initial set of alert rules includes a minimum event severity threshold that limits the driver safety application to providing alerts to the user for detected driving events that have a severity exceeding the minimum event severity threshold and generating the new set of alert rules comprises increasing or decreasing the minimum event severity threshold. In some embodiments, the initial set of alert rules cause the driver safety application to generate the alerts as a first alert type and the new set of alert rules cause the driver safety application to generate future alerts as a second alert type. In some embodiments, the information for an alert in the set of alerts provided to the user in response to a driving event comprises at least one of: a location of the computing device when the alert was provided; a time when the alert was provided; a type of the alert; a type of the driving event; or a severity of the driving event.

The method may further comprise receiving a first collection of alert histories for a first plurality of users who disabled their respective instances of the driver safety application; receiving a second collection of alert histories for a second plurality of users who have not disabled their respective instances of the driver safety application; and training the user-churn machine learning model using the first collection of alert histories and the second collection of alert histories.

In some embodiments, a system for optimized driving alerts is presented. The system may comprise a driving alert management server system. The driving alert management server system may comprise a memory and one or more hardware processors that, when executing computer executable instructions stored in the memory, are configured to transmit an initial set of alert rules to a driver safety application executing on a computing device, wherein the initial set of alert rules cause the driver safety application to provide alerts to a user in response to detecting occurrences of one or more types of driving events. The one or more hardware processors may be further configured to receive an alert history from the driver safety application, the alert history comprising information about a set of alerts provided to the user in accordance with the initial set of alert rules. The one or more hardware processors may be further configured to execute a user-churn machine learning model on the alert history to generate a likelihood that the user will disable future alerts caused by the initial set of alert rules. The one or more hardware processors may be further configured to compare the likelihood with predefined churn threshold criteria. The one or more hardware processors may be further configured to generate a new set of alert rules to optimize the likelihood by modifying the initial set of alert rules based on comparing the likelihood with the predefined churn threshold criteria. The one or more hardware processors may be further configured to transmit the new set of alert rules to the driver safety application.

In some embodiments, the one or more hardware processors are configured to generate the new set of alert rules by iteratively generating a modified set of alert rules based on the initial set of alert rules or a previous iteration of the modified set of alert rules; generating an updated likelihood that the user will disable future alerts caused by the modified set of alert rules; and comparing the updated likelihood with the predefined churn threshold criteria. In some embodiments, the one or more hardware processors are configured to generate the updated likelihood by generating a synthetic alert history that includes a subset of alerts from the alert history and excludes alerts from the alert history that do not conform to the modified set of alert rules; and executing the user-churn machine learning model on the synthetic alert history to generate the updated likelihood. In some embodiments, the one or more hardware processors are configured to iteratively generate the modified set of alert rules by setting a lower bound based on the initial set of alert rules or the previous iteration of the modified set of alert rules; setting an upper bound based on a predefined set of alert rules; and identifying the modified set of alert rules from a midpoint between the lower bound and the upper bound.

In some embodiments, the one or more hardware processors are further configured to receive a first collection of alert histories for a first plurality of users who disabled respective instances of the driver safety application; receive a second collection of alert histories for a second plurality of users who have not disabled their respective instances of the driver safety application; and train the user-churn machine learning model using the first collection of alert histories and the second collection of alert histories.

The system may further comprise a plurality of computing devices comprising the computing device, wherein each computing device executes a respective instance of the driver safety application and is associated in a datastore managed by the driving alert management server system with a respective user of a plurality of users, and the plurality of computing devices comprises at least one of: a vehicle's computer; a smartphone; or a special purpose computer installed within a vehicle.

In some embodiments, one or more non-transitory computer-readable storage media are presented. The one or more non-transitory computer-readable storage media may store instructions that, upon execution by one or more processors of a driving alert management server system, cause the driving alert management server system to perform operations comprising transmitting an initial set of alert rules to a driver safety application executing on computing device, wherein the initial set of alert rules cause the driver safety application to provide alerts to a user in response to detecting occurrences of one or more types of driving events. The operations may further comprise receiving an alert history from the driver safety application, the alert history comprising information about a set of alerts provided to the user in accordance with the initial set of alert rules. The operations may further comprise executing a user-churn machine learning model on the alert history to generate a likelihood that the user will disable future alerts caused by the initial set of alert rules. The operations may further comprise comparing the likelihood with predefined churn threshold criteria. The operations may further comprise generating a new set of alert rules to optimize the likelihood by modifying the initial set of alert rules based on comparing the likelihood with the predefined churn threshold criteria. The operations may further comprise transmitting the new set of alert rules to the driver safety application.

In some embodiments, generating the new set of alert rules to optimize the likelihood comprises iteratively generating a modified set of alert rules based on the initial set of alert rules or a previous iteration of the modified set of alert rules; generating an updated likelihood that the user will disable future alerts caused by the modified set of alert rules; and comparing the updated likelihood with the predefined churn threshold criteria. In some embodiments, generating the updated likelihood comprises generating a synthetic alert history that includes a subset of alerts from the alert history and excludes alerts from the alert history that do not conform to the modified set of alert rules; and executing the user-churn machine learning model on the synthetic alert history to generate the updated likelihood.

### BRIEF DESCRIPTION OF THE DRAWINGS

Aspects of the present disclosure now will be described more fully hereinafter with reference to the accompanying drawings, which are intended to be read in conjunction with both this summary, the detailed description and any preferred and/or particular embodiments specifically discussed or otherwise disclosed. The various aspects may, however, be embodied in many different forms and should not be construed as limited to the embodiments as set forth herein; rather, these embodiments are provided by way of illustration only and so that this disclosure will be thorough, complete, and will fully convey the full scope to those skilled in the art.
FIG. 1 is a diagram and associated flow chart of an example process to optimize driving alerts generated by mobile devices, according to some embodiments.
FIG. 2 is a diagram illustrating a system for transmitting alert rules and histories between computing devices for optimizing driving alerts generated by mobile devices, according to some embodiments.
FIG. 3 is a block diagram illustrating an example system architecture of computing devices for optimized driving event alerts, according to some embodiments.
FIG. 4 is a system diagram illustrating the flow of data between components of a system for optimizing driving event alerts, according to some embodiments.
FIG. 5 is a flow diagram of an example process for providing optimized driving alert rules to a mobile device, according to at least one embodiment.
FIG. 6 is a flow diagram of an example process for optimizing driving event alert rules, according to at least one embodiment.

### DETAILED DESCRIPTION OF SPECIFIC EMBODIMENTS

While certain embodiments are described, these embodiments are presented by way of example only and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

Computing devices equipped with myriad sensors have become ubiquitous. These sensors can capture motion data that can unveil extensive information about a device's surroundings and the activities engaged in by its user, such as walking, running, or riding in a vehicle. Moreover, this data enables detailed analysis of the performance of these activities. For example, motion of a mobile phone disposed within a moving vehicle can be harnessed to discern various driving characteristics, such as average and instantaneous vehicle speed, longitudinal and lateral acceleration, location, elevation, and relative vehicle orientation in the real-world, among others.

Real-time insights about a vehicle's movements garnered from the sensors of a mobile device can offer corresponding revelations into the driving tendencies of the driver. As such, monitoring a driver's real-time driving tendencies presents advantages for insurance companies, employers, training agencies, and the public at large. For instance, providing real-time feedback on safe and unsafe driving maneuvers can empower the driver to recognize and avoid hazardous driving behaviors in the future, thereby reducing their own risks of being involved in a crash as well as reducing the risk they pose to others.

However, absent mechanisms to manage the quantity and/or frequency of alerts provided to a user, mobile devices may indiscriminately provide alerts for every instance of safe and/or unsafe driving maneuvers detected for a user. Paired with the ever increasing number of mobile device applications vying for a user's attention, and therefore wearing on the user's patience, this may cause the user to perceive new alerts as making their device too annoying and/or distracting. As a result, users may disable their mobile devices from producing future alerts altogether. In addition to their effect on user experience, producing indiscriminate alerts may also result in excessive resource consumption.

Embodiments described herein address these and other challenges associated with using mobile devices to detect and alert their users to instances of safe or unsafe driving by providing systems and methods for optimizing the quantity and/or frequency of alerts for each particular user. Using the history of alerts provided to users who have and have not disabled alerts, a machine learning model can be trained to predict the likelihood that a user will churn given their own history of alerts provided according to a first set of rules. Based on the prediction, the first set of rules can be adjusted to provide a new set of rules that cause the mobile device to provide fewer alerts and/or provide alerts at a reduced frequency. The new set of rules may then be applied to the user's previous history to produce a synthetic version of the user's alert history. That the new set of rules will reduce the likelihood that the user will disable future alerts may be verified by producing a new likelihood for the synthetic version of the user's alert history before providing the new set of rules to the user's mobile device for subsequent execution.

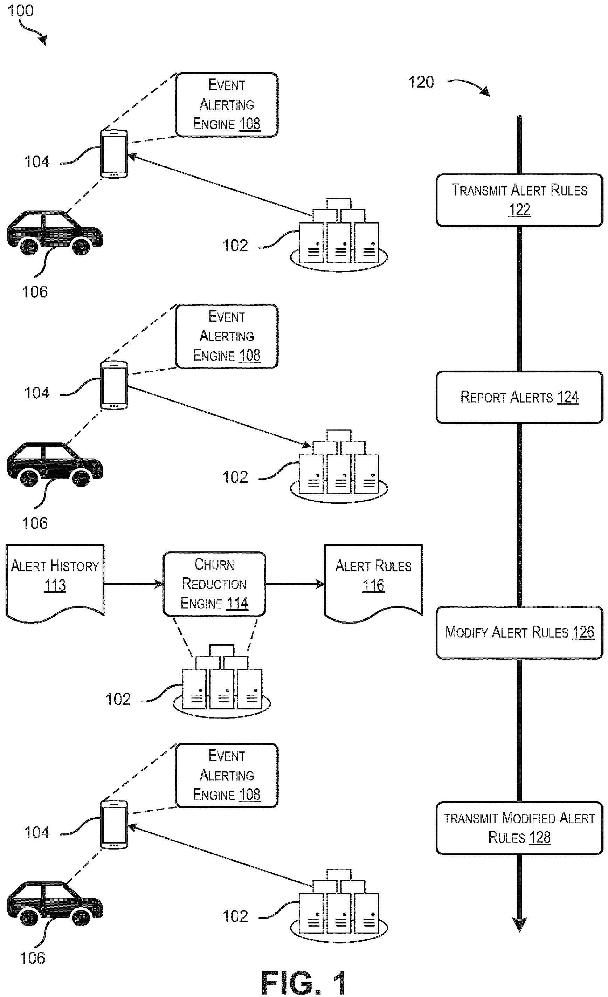

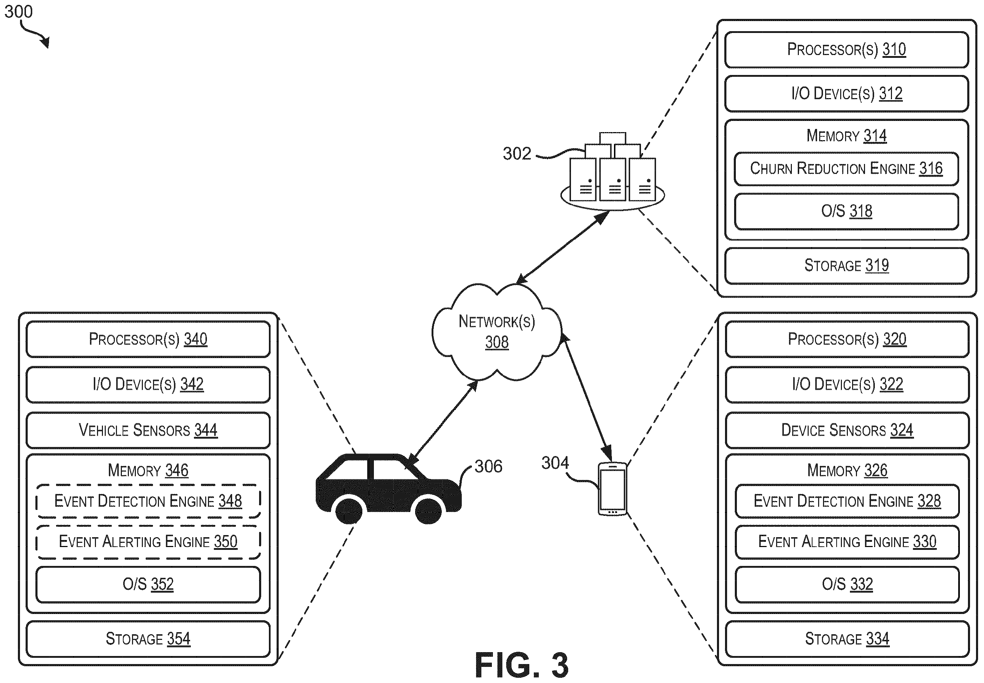

Turning now to the figures, **FIG. 1** is a diagram and associated flow chart of an example process 120 to optimize driving alerts generated by mobile device 104, according to some embodiments. The diagram shows elements of a system 100 corresponding to the blocks of the process 120. The system 100 can include driving alert management server system 102, mobile device 104, and vehicle 106 as well as any suitable combination of additional computing devices such as cloud servers and/or additional remote servers. Additional details about different computing systems that are capable of performing the techniques of the disclosure are provided later on with respect to FIG. 3.

Mobile device 104 can be a smartphone, tablet computer, or other suitable computing device for performing one or more operations of process 120, such as a computerized tag installed in a vehicle, a dashcam, or other sensing device. Mobile device 104 can be in the possession of a driver of vehicle 106 or a passenger in vehicle 106, and/or may be secured to the vehicle itself, so that the motion of mobile device 104 generally corresponds with the motion of vehicle 106. Mobile device 104 can implement event alerting engine 108. Event alerting engine 108 can be implemented as part of an application or other software program executing on the user device. For example, event alerting engine 108 can be provided as part of an application for detecting and alerting a user of mobile device 104 to safe and unsafe driving activities.

An application comprising event alerting engine 108 may be obtained from a server system, such as driving alert management server system 102, provided and/or managed by a driving safety service provider or other organization, such as an insurance company. Driving alert management server system 102 can include one or more computing devices, including cloud servers and Virtual Machines (VMs). Driving alert management server system 102 may be an example of a distributed computing system or cloud computing system that can implement churn reduction engine 114 for performing one or more operations of process 120.

The process 120 can begin at block 122 with driving alert management server system 102 transmitting a set of alert rules to mobile device 104. Event alerting engine 108 may apply the alert rules to determine when and/or how to provide an alert to the user of mobile device 104 in response to one or more types of driving events associated with vehicle 106. Device sensors of mobile device 104 may be used to detect driving events associated with vehicle 106. For example, mobile device 104 can include one or more accelerometers, such as a three-axis Micro-Electro-Mechanical Systems (MEMS) sensor, that can measure acceleration of mobile device 104 in three dimensions. The data generated by the accelerometer can show whether mobile device 104 experiences any rapid acceleration events. For example, a sudden deceleration of mobile device 104 may indicate that vehicle 106 in which mobile device 104 is travelling experienced a hard braking event. Other examples of detectable driving events may include harsh accelerations, speeding, swerving, distracted driving, hard cornering, or other unsafe driving activities. Additionally, safe driving activities may be detected using device sensors of mobile device 104, such as driving the speed limit, extended periods without mobile device usage, smooth accelerations and decelerations, or the like. In addition to accelerometers, mobile device 104 can have other sensors including, but not limited to, gyroscopes, barometers, microphones, photosensors, cameras, light detection and ranging (LIDAR) sensors or other depth sensors, and global positioning system (GPS) receivers.

After detecting a driving event, the set of alert rules received from driving alert management server system 102 may control whether, when, and/or how event alerting engine 108 provides an alert to the user of mobile device 104. For example, the alert rules may define one or more threshold criteria that limit the number and/or frequency of detected driving events for which event alerting engine 108 provides an alert to the user. As another example, the alert rules may control when event alerting engine 108 provides an alert to the user. Further still, the alert rules may define one or more methods by which event alerting engine 108 is to provide the alert to the user. Further detail related to whether, when, and/or how event alerting engine 108 provides alerts to a user is described below.

Returning to process 120, at block 124 event alerting engine 108 may report a history of detected driving events and alerts to driving alert management server system 102. After detecting a driving event and optionally providing an alert to the user, event alerting engine 108 may transmit an indication of the driving event to driving alert management server system 102. The indication can include information about the detected event and/or information about an alert provided to the user about the detected event. For example, the information about the detected event can include the type of the event that was detected, the time at which the event was detected, the location of the event, the severity of the event, contextual information about the surrounding environment when the event occurred (e.g., weather, traffic, road type, etc.), or the like. Information about the alert may include whether or not event alerting engine 108 provided an alert, when the alert was provided, what type of alert was provided, or the like. Additionally, or alternatively, mobile device 104 may transmit the device sensor data from which the event was detected to driving alert management server system 102.

In some embodiments, event alerting engine 108 transmits the indications of the driving events in real-time during the drive, at regular intervals, and/or on-demand. For example, event alerting engine 108 may transmit a history of driving events and alerts at the end of each day, week, month, or other similarly suitable period of time. Additionally, or alternatively, event alerting engine 108 may transmit the history of driving events and alerts at the conclusion of each drive, the conclusion of every tenth drive, or another suitable number of driving events.

As more aspects of a user's life are integrated with their mobile device, the number of notifications, alerts, and applications vying for the user's attention will continue to increase. With this increased level of device "chattiness," users may quickly become annoyed or overwhelmed with the number of applications and types of notifications they are receiving. As a result, users may disable individual sources of the "chattiness," such as an application, service, or notification rule, that is perceived to be the most "chatty" and/or least relevant to the user. From the perspective of the application or service that provides alerts, a user taking steps to disable future alerts is viewed as a user "churning out," or just "churn." In addition to an increased likelihood of churn, increased application and/or service "chattiness" may cause users to devalue the importance of a single alert. As a result, the ability of an alert to positively improve a user's driving experience by making them aware of instances of safe versus unsafe driving activities may be greatly reduced.

To address these challenges, alert rules may be modified to optimize their impact on affecting the way a particular user drives while reducing the likelihood that a user will "churn-out." At block 126, driving alert management server system 102 can modify the initial set of alert rules used by event alerting engine 108. Driving alert management server system 102 may execute churn reduction engine 114 to produce modified alert rules 116 that are optimized for a particular user. For example, modified alert rules 116 may cause event alerting engine 108 to decrease the frequency at which alerts are provided to the user in order to reduce the likelihood of churn. As another example, modified alert rules 116 may cause event alerting engine 108 to increase the frequency at which alerts are provided to the user in order to make the user more aware of the frequency at which they perform safe versus unsafe driving activities. These and other modifications are described further herein.

Since driving tendencies may vary drastically from one driver to the next, application of a universal set of alert rules across a population may result in bad drivers receiving many more alerts, or alerts at a higher frequency, compared to good drivers, which could lead to an increased level of churn for bad drivers who could benefit most from the alerts. In some embodiments, churn reduction engine 114 tailors alert rules to an individual user based on that user's alert history 113. As described above, alert history 113 may include an indication of events detected by mobile device 104 and/or alerts provided by event alerting engine 108. By considering the frequency with which a particular user performs various driving activities and the right frequency at which alerts are provided for detected instances of those activities, churn reduction engine 114 may provide modified alert rules 116 that are tailored to the particular user.

At block 128, modified alert rules 116 can be transmitted back to mobile device 104. In response, event alerting engine 108 may replace the initial or previous set of alert rules with modified alert rules 116. Event alerting engine 108 may then apply modified alert rules 116 to determine whether, when, and/or how to provide alerts in response to subsequently detected driving events. As subsequent driving events are detected, alert history 113 can be updated to reflect the most recent driving activity trends for the user and reported to driving alert management server system 102 for additional alert rule modification. In this way, the set of alert rules applied by event alerting engine 108 can evolve and adapt to the user's current driving abilities while ensuring that they maintain their efficacy and minimize the likelihood that the user will churn.

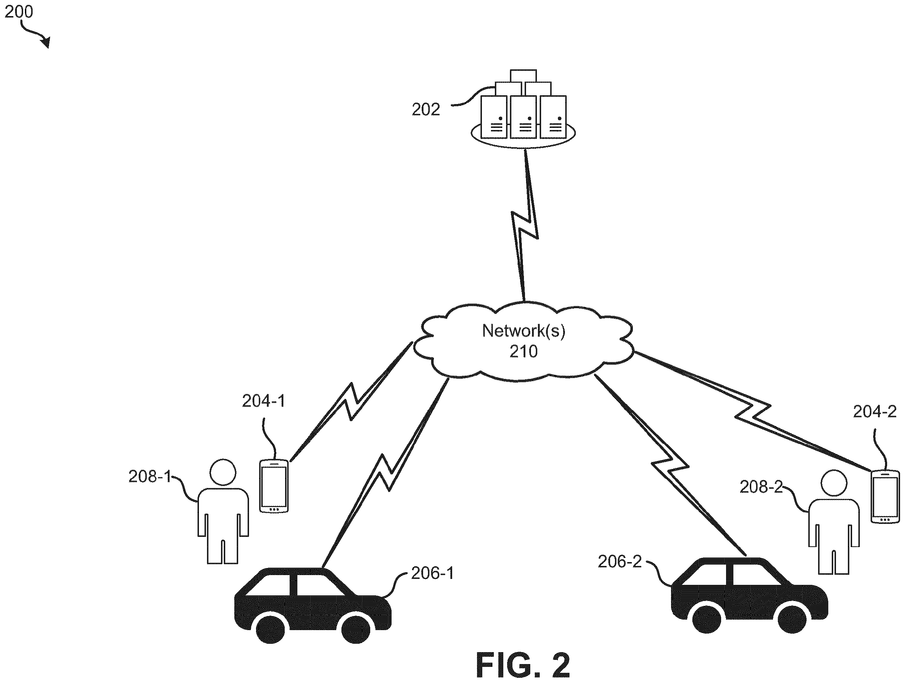

**FIG. 2** is a diagram illustrating a system 200 for transmitting alert rules and histories between computing devices for optimizing driving alerts generated by mobile devices, according to some embodiments. The system 200 can include driving alert management server system 202, mobile devices 204 and vehicles 206. Driving alert management server system 202 may be an example of driving alert management server system 102 of FIG. 1. Similarly, the mobile devices 204 and vehicles 206 may be examples of mobile device 104 and vehicle 106 of FIG. 1.

As depicted in FIG. 2, the system 200 can include several network-connected computing devices, including vehicles 206 that can include sensors and transceivers. Each device may be wholly or partially controlled by different entities. For example, driving alert management server system 202 may be operated by a driving safety service provider and related software applications. First mobile device 204-1 may be operated by first user 208-1, who may be a driver of first vehicle 206-1. Second mobile device 204-2 may be operated by second user 208-2, who may be a driver of second vehicle 206-2. Vehicle software may be primarily provided by a manufacturer, with limited ability for users 208 to modify the software components of vehicles 206.

Mobile devices 204 may be configured to run an application or other software components provided by driving alert management server system 202. Additionally, or alternatively, vehicles 206 may include software components provided by driving alert management server system 202. For example, vehicles 206 may run an application using an event alerting engine (e.g., event alerting engine 108 of FIG. 1) to perform some or all of the operations described above for detecting and alerting users 208 to various driving events. This may allow the system to offload some of the processing from mobile devices 204 to vehicles 206, which may reduce consumption of resources on mobile devices 204. Additionally, or alternatively, event detection and alerting devices may be integrally installed within vehicles 206. For example, a special purpose computing device may be permanently or semi-permanently installed within vehicles 206 to detect and alert a current driver to various driving activities performed by the driver.

Each of the computing devices of the system 200 may be continuously or intermittently connected to one another using one or more networks 210 and one or more related communication protocols. Networks 210 may include any one or a combination of many different types of networks, such as the Internet, wireless networks, cellular networks, satellite networks and other private and/or public networks. For example, first mobile device 204-1 may connect to and communicate with first vehicle 206-1 via Bluetooth or similar short-range wireless networking technology. Driving alert management server system 202 may be in the cloud as part of separate cloud computing systems and may communicate over the public Internet. Mobile devices 204 can communicate with driving alert management server system 202 over the public Internet, using a cellular communication standard like 5G or a wireless standard like WiFi. Vehicles 206 may communicate directly with driving alert management server system 202 over a cellular network, wireless network, satellite network, or the like. Additionally, or alternatively, vehicles 206 may communicate with driving alert management server system 202 via mobile devices 204.

Driving alert management server system 202 may maintain accounts for users 208. In some cases, users 208 may enroll, or otherwise create an account on driving alert management server system 202 via another service, including, for example, an automobile insurance provider. Users 208 may download an application for their respective mobile devices 204 from driving alert management server system 202 to receive driving event detection and alerting while operating vehicles 206. Accounts maintained by driving alert management server system 202 may then link users 208 with their respective vehicles 206 and mobile devices 204. By maintaining a separate account for each of users 208, driving alert management server system 202 can maintain a history of the driving events detected while users 208 are driving their respective vehicles 206, the alerts provided in response, and the alert rules used to determine whether, when, and/or how to provide such alerts.

As discussed above with respect to FIG. 1, the driving tendencies of first user 208-1 may vary considerably compared to second user 208-2. For example, based on the event and/or alert histories for each of users 208, driving alert management server system 202 may determine that first user 208-1 performs one or more types of unsafe driving activities at a higher frequency compared to that of second user 208-2. As a result, driving alert management server system 202 may modify the set of alert rules used by first mobile device 204-1 compared to the set of alert rules used by second mobile device 204-2 so that first user 208-1 receives approximately the same number of alerts and/or receives alerts at approximately the same frequency as second user 208-2. In some embodiments, the frequency and/or number of alerts provided to each of first user 208-1 and second user 208-2 are optimized to reduce the likelihood of either user disabling future alerts, as described further herein.

FIG. 3 is a block diagram illustrating an example architecture of a system 300 of computing devices for optimizing driving event alerts, according to some embodiments. The system 300 includes driving alert management server system 102, mobile device 304, vehicle 306, and one or more network(s) 308. The system 300 may be an example of system 200 described above with respect to FIG. 2. Driving alert management server system 102 may be an example of other backend server systems described herein, such as driving alert management server system 202 of FIG. 2 and driving alert management server system 102 of FIG. 1. Similarly, mobile device 304 may be an example of mobile device 204 of FIG. 2, and vehicle 306 may be an example of vehicle 206 of FIG. 2. Network(s) 308 may include any one or a combination of many different types of networks, such as the Internet, wireless networks, cellular networks, and other private and/or public networks.

Mobile device 304 can have at least one memory 326, one or more processor(s) 320, one or more Input/Output (I/O) device(s) 322, and device sensors 324. The processor(s) 320 can include one processing device or multiple processing devices. Non-limiting examples of the processor(s) 320 include Field Programmable Gate Arrays (FPGAs), Application-Specific Integrated Circuits (ASICs), or microprocessors. The processor(s) 320 can execute instructions stored in memory 326 to perform operations. In some examples, the instructions can include processor-specific instructions generated by a compiler or an interpreter from code written in any suitable computer-programming language, such as C, C++, C#, and Java. I/O device(s) 322 can include displays, monitors, touch screens, mouse, keyboard, or other I/O devices. Device sensors 324 can include components for acquiring data related to the position, orientation, location, and motion of mobile device 304, as well as camera sensors and microphones that may also be included in I/O device(s) 322. Non-limiting examples of device sensors 324 include accelerometers, thermometers, gyroscopes, barometers, microphones, photosensors, cameras, light detection and ranging (LIDAR) sensors or other depth sensors, and global positioning system (GPS) units.

Mobile device 304 may also include additional storage 334, such as either removable storage or non-removable storage including, but not limited to, magnetic storage or other solid state storage. The disk drives and their associated computer-readable media may provide non-volatile storage of computer-readable instructions, data structures, program modules, and other data for mobile device 304. In these embodiments, storage 334 may be utilized to store data generated by device sensors 324 or received from one or more other devices in system 300.

Memory 326 may include an operating system 332 and one or more application programs, components, or services for implementing the features disclosed herein, including event detection engine 328 and event alerting engine 330. In some examples, event detection engine 328 and/or event alerting engine 330 may be executed as part of a larger application hosted on mobile device 304. Event detection engine 328 may be configured to take data from device sensors 324 as inputs to detect occurrences of one or more types of driving related activities. The one or more types of driving related activities, or driving events, may include safe and/or unsafe driving maneuvers. Safe driving maneuvers may include decelerating at a controlled rate of deceleration below a predefined deceleration rate threshold, driving at or below a posted speed limit or other suitable speed for the road type and/or conditions, performing turns at or below a speed that results in lateral acceleration at or below a predefined threshold, or the like. Unsafe driving maneuvers may include speeding, hard braking, harsh accelerations, distracted driving (e.g., using mobile device 304 while operating a vehicle), unsafe lane changes, aggressive driving, swerving, or the like.

As described further herein, event detection engine 328 may collect data from device sensors 324 to detect driving related activities. The data collected from device sensors 324 may indicate motion and/or orientation of mobile device 304. During a drive, the motion and/or orientation of mobile device 304 may be caused by the motion of a vehicle and/or by a user, such as when a user physically interacts with mobile device 304. Event detection engine 328 may analyze the motion and/or orientation data from device sensors 324 to isolate motion of mobile device 304 caused by a vehicle. Based on the isolated motion of mobile device 304 caused by the vehicle, movements of the vehicle, such as speed, lateral and/or longitudinal acceleration, or the like may be determined. The movements of the vehicle may then be processed to identify the occurrence of driving events and/or activities. For example, by comparing the longitudinal acceleration of the vehicle over time with one or more predefined threshold criteria associated with hard braking, one or more occurrences of hard braking may be detected.

Isolated motion of mobile device 304 not caused by the vehicle (e.g., due to a user interacting with mobile device 304) may be processed to detect occurrences of mobile device usage associated with distracted driving. For example, based on the relative orientation of mobile device 304 with respect to the vehicle and/or the user, event detection engine 328 can detect instances when a user may be holding mobile device 304 up to their ear indicative of a user making a phone call. As another example, based on motion of mobile device 304 not attributable to the motion of a vehicle, event detecting engine 328 can detect instances when a user is tapping at a screen of mobile device 304, indicating that the user's eyes may be focused on the screen while typing or navigating one or menus.

Upon detection of a driving event, event alerting engine 330 may determine whether, when, and/or how to alert the user to the detected driving event. As described above, alerts can help provide positive and negative feedback to a user about their driving tendencies. For example, by notifying the user when they perform unsafe driving maneuvers, the user may gain a better appreciation for how frequently they perform such driving maneuvers. Additionally, or alternatively, by providing alerts in real-time, or near real-time after an event is detected, the users may more easily associate their actions with safe versus unsafe driving tendencies. However, while alerts and/or notifications can have a positive effect on a user's driving tendencies, excessive alerts and/or notifications may cause the user to downplay the severity of their actions and/or disable future alerts when the frequency and/or volume of alerts is perceived to be too frequent.

Event alerting engine 330 may apply one or more alert rules to optimize the effectiveness of alerts while reducing the likelihood that a user will disable future alerts. Event alerting engine 330 may receive alert rules from driving alert management server system 302 as described further herein. Alert rules may control whether, when, and/or how event alerting engine 330 causes mobile device (e.g., I/O device(s) 322) to output alerts and/or notifications to a user in response to an event being detected. Alert rules may include one or more minimum and/or maximum threshold criteria that control whether an alert is provided to a user. For example, alert rules may set a minimum interarrival time between successive alerts of any type and/or for events of a particular type. In response to detecting an event, event alerting engine 330 may determine whether the amount of time since the last alert meets or exceeds the minimum interarrival time. In response to determining that the amount of time since the last alert meets or exceeds the minimum interarrival time, event alerting engine 330 may proceed to cause mobile device 304 to output an alert to the user. In response to determining that the amount of time since the last alert is less than the minimum interarrival time, event alerting engine 330 may ignore the event and/or cache the event for notification to the user after the minimum interarrival time has transpired.

As another example, alert rules may set a maximum frequency for any alert and/or for alerts of a particular type. The maximum frequency may be in relation to drives and/or in relation to time. For example, the maximum frequency may cause event alerting engine 330 to provide alerts no more than a predefined number of times per each drive. Additionally, or alternatively, the maximum frequency may cause event alerting engine 330 to provide alerts no more than a predefined number of times per half-hour, per hour, per day, per week, or the like. A single minimum interarrival time and/or maximum frequency may be defined for all events. Additionally, or alternatively, individual minimum interarrival times and/or maximum frequencies can be defined for each type of event.

Alert rules may further include event severity thresholds to control the frequency and/or volume of alerts provided by event alerting engine 330. In response to a driving event being detected by event detection engine 328, event alerting engine 330 may compare a severity of event determined by event detection engine 328 with event severity threshold criteria to determine whether to provide an alert to the user. For example, event alerting engine 330 may compare a maximum deceleration rate for a detected hard braking event with a minimum deceleration rate for providing hard braking alerts. In response to determining that the event severity meets or exceeds the threshold criteria, event alerting engine 330 may provide an alert to the user. In response to determining that the event severity does not meet the threshold criteria, event alerting engine 330 may ignore the event and/or cache the event for subsequent notification to the user (e.g., at the completion of the drive). By increasing the severity threshold criteria, the frequency and/or volume of alerts may be decreased. Alternatively, by decreasing the severity threshold criteria, the frequency of alerts may be increased.

Alert rules may control when and/or how event alerting engine 330 provides alerts to a user to further optimize the efficacy of alerts while reducing the likelihood that the user will disable future alerts. For example, alert rules may cause event alerting engine 330 to provide alerts in real-time in response to detected events. Additionally, or alternatively, alert rules may cause event alerting engine 330 to cache alerts for presentation at a later time, such as at the conclusion of the drive. Alert rules may control how event alerting engine 330 provides alerts to a user. For example, alert rules may define the type of alert provided to the user. Types of alerts may include auditory alerts (e.g., via a speaker of mobile device 304 or vehicle 306), visual alerts (e.g., via a screen of mobile device 304 or vehicle 306), haptic alerts, or the like. Alert rules may also control the characteristics of each type of alert. For example, alert rules may define a volume for auditory alerts.

Event detection engine 328 and/or event alerting engine 330 may cache and/or report detected events and/or alerts provided to the user as an alert history associated with the user. For example, in response to detecting occurrences of driving events, event detection engine 328 may store a record of the event in storage 334 and/or transmit a record of the vent to driving alert management server system 302. Additionally, or alternatively, in response to event alerting engine 330 providing an alert to the user, event alerting engine 330 may store a record of the event that prompted the alert as well as information about the alert in storage 334 and/or transmit the record of the alert to driving alert management server system 302. Additional details related to the alert history for a user are described further herein.

As described above, vehicle 306 may be considered a "smart" computing device with computing and connectivity capabilities similar to modern smartphones and other user devices. Like mobile device 304, vehicle 306 can have at least one memory 346, one or more processing processor(s) 340, one or more I/O device(s) 342, and vehicle sensors 344. The processor(s) 340 can include one processing device or multiple processing devices. Non-limiting examples of the processor(s) 340 include FPGAs, ASICs, or a microprocessors. The processor(s) 340 can execute instructions stored in memory 346 to perform operations. In some examples, the instructions can include processor-specific instructions generated by a compiler or an interpreter from code written in any suitable computer-programming language, such as C, C++, C#, and Java. The processor(s) 340 may also perform operations for the control of the automotive functions of vehicle 306, including controlling engine performance, operating electronic stability control, antilock braking systems, emission control systems, and the like. In some examples, some of the processor(s) 340 and memory 346 may perform automotive control functions while others of the processor(s) 340 perform operations related to the user interface, for example managing climate control or the media and infotainment system.

The I/O device(s) 342 can include displays, monitors, touch screens, physical knobs, buttons, toggle switches, microphones, speakers, or other I/O devices. The vehicle sensors 344 can include components for acquiring data related to the speed, engine operation, emission control system, braking system, stability control system, as well as camera sensors and acoustic sensors that provide data related to the exterior of vehicle 306. Non-limiting examples of vehicle sensors 344 include cameras, acoustic sensors, LIDAR sensors, inertial measurement units, radar sensors, accelerometers, gyroscopes, GPS receivers, position sensors for engine components (throttle, camshaft), voltage sensors for various points in the vehicle's electrical system, temperature sensors, oxygen sensors, knock sensors, rain sensors, photosensors (e.g., for detecting nearby light sources like oncoming vehicles), vehicle speed sensors, driver assistance system status, braking system status, airbag deployment indicators, and vehicle light status.

Vehicle 306 may also include additional storage 354, such as either removable storage or non-removable storage including, but not limited to, magnetic storage or other solid state storage. The disk drives and their associated computer-readable media may provide non-volatile storage of computer-readable instructions, data structures, program modules, and other data for vehicle 306. In these embodiments, the storage 354 may be utilized to store data generated by the vehicle sensors 344. As described previously, the vehicle sensors 344 may produce substantial amounts of data, such that it would be computationally wasteful to store all of the vehicle sensor generated during vehicle trips of more than several minutes in length. Accordingly, the storage 354 may be configured to store a certain amount of vehicle sensor data from the vehicle sensors 344 (e.g., one hour of data, 30 minutes of data, etc.). When vehicle sensor data is to be transmitted to other devices in the system 300, a portion of the vehicle sensor data stored in storage 354 may be selected and transmitted.

The memory 346 may include an operating system 352 and one or more application programs, components, or services for implementing the features disclosed herein, including, in some embodiments, event detection engine 348 and/or event alerting engine 350. In these embodiments, all or a portion of event detection engine 348 and/or event alerting engine 350 may be executed on vehicle 306 in combination with or alternatively to mobile device 304. Event detection engine 348 and/or event alerting engine 350 may be the same or perform similar operations as described above in relation to event detection engine 328 and/or event alerting engine 330. For example, as with mobile device 304, event detection engine 348 and/or event alerting engine 350 may be executed as part of a larger application hosted on vehicle 306, and may be configured to obtain device sensor data from mobile device 304 as inputs to detect driving events. In examples in which event detection is performed by vehicle 306, event detection engine 348 may be configured to take data from vehicle sensors 344 as additional inputs.

Turning now to driving alert management server system 302, driving alert management server system 302 can have at least one memory 314, one or more processor(s) 310 and one or more I/O device(s) 312. The processor(s) 310 can include one processing device or multiple processing devices. Non-limiting examples of the processor(s) 310 include FPGAs, ASICs, or a microprocessors. The processor(s) 310 can execute instructions stored in memory 314 to perform operations. In some examples, the instructions can include processor-specific instructions generated by a compiler or an interpreter from code written in any suitable computer-programming language, such as C, C++, C#, and Java. The I/O device(s) 312 can include displays, monitors, touch screens, mouse, keyboard, or other I/O devices.

Driving alert management server system 302 may also include storage 319, such as either removable storage or non-removable storage including, but not limited to, magnetic storage or other solid state storage. The disk drives and their associated computer-readable media may provide non-volatile storage of computer-readable instructions, data structures, program modules, and other data for driving alert management server system 302. In these embodiments, storage 319 may be utilized to store alert history and/or churn data for a plurality of user accounts managed by driving alert management server system 302.

Memory 314 may include operating system 318 and one or more application programs, components, or services for implementing the features disclosed herein, including churn reduction engine 316. Churn reduction engine 316 may include one or more machine learning models and/or classifiers trained to generate a churn classification for a user based on event and/or alert history for the user. The churn classification for a user may indicate the likelihood that the user will disable future alerts on their mobile device. Additionally, or alternatively, churn reduction engine 316 may include one or more components that generate and/or modify alert rules for a user based on the churn classification for a user. While described as a part of driving alert management server system 302, one or more components and/or functionalities of churn reduction engine 316 may be additionally, or alternatively, implemented by or on mobile device 304 and/or vehicle 306. Additional details about modifying alert rules based on individualize churn classifications for users are described further herein.

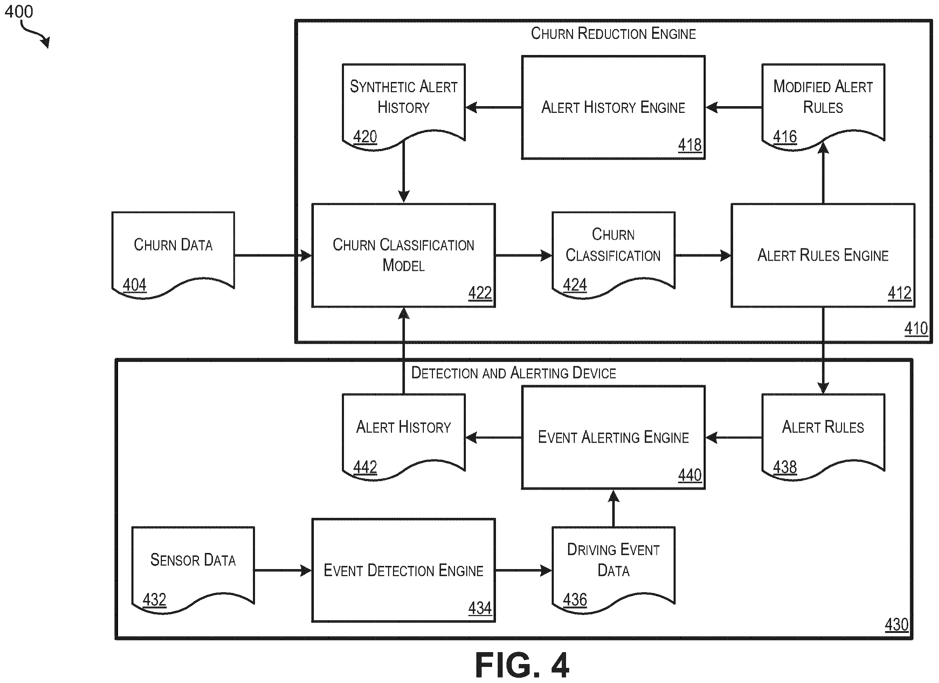

FIG. 4 is a system diagram illustrating the flow of data between components of a system 400 for optimizing driving event alerts, according to some embodiments. System 400 can include churn reduction engine 410 and detection and alerting device 430. Detection and alerting device 430 may be a computerized device capable of being disposed in a vehicle during a drive. For example, detection and alerting device 430 may be a mobile device such as a smartphone, such as mobile device 304 described above. Additionally, or alternatively, detection and alerting device 430 may include one or more processing components of a vehicle, such as vehicle 306 described above.

Detection and alerting device 430 may include one or more software components, applications, services, and/or packages, such as event detection engine 434 and event alerting engine 440. As described above, event detection engine 434 may collect and analyze sensor data 432 to detect one or more types of driving events. Sensor data 432 may include raw (e.g., unprocessed) signals from one or more physical and/or software sensors of detection and alerting device 430, such as accelerometer, magnetometer, gyroscope, and/or Global Navigation Satellite System (GNSS) signals. Additionally, or alternatively, sensor data 432 may include processed data indicating changes in motion and/or orientation of detection and alerting device 430 and/or a vehicle in which detection and alerting device 430 is disposed. Event detection engine 434 may output driving event data 436 in response to detecting a driving event. Driving event data 436 can include information about the type of event that was detected, the time when the event was detected, a severity of the event, raw and/or processed sensor data used to detect the event, or the like.

In response to detecting a driving event, event detection engine 434 may provide driving event data 436 to event alerting engine 440. In response to receiving driving event data 436, event alerting engine 440 may apply one or more alert rules 438 to determine whether, when, and/or how to alert a driver of the vehicle to the occurrence of the detected driving event. Event alerting engine 440 may generate alert history 442 based on the history of alerts generated and/or provided by event alerting engine 440. For example, alert history 442 may include data for a collection of alerts generated by event alerting engine 440 in response to receiving driving event data 436. The data for each alert may include details about when and/or how the alert was provided to the driver. Additionally, or alternatively, alert history 442 may include some or all of the driving event data for which an alert was generated, such as the type of event, the severity of the event, or the like. In some embodiments, alert history 442 further includes driving event data for which alert rules 438 precluded event alerting engine 440 from generating an alert. For example, alert history 442 may include a collection of driving events, details about each event, whether or not an alert was generated for each event, as well as when and/or how the alert was provided to the user.

In some embodiments, alert history 442 includes aggregate data representing the alerts generated by event alerting engine 440 and/or events detected by event detection engine 434 as a whole. For example, alert history 442 can include one or more summary statistics representing the total and/or average number of alerts provided in a predefined period of time. The predefined period of time may be defined in time, such as days, hours, weeks, months, years, and/or by predefined numbers of events, such as the last 5 drives, 10 drives, 15 drives, or more for which alerts were provided in response to driving events being detected. As another example, alert history 442 can include details about the frequency with which alerts were generated, such as the number of alerts that were provided per hour, per day, per driving event, or the like. As with the underlying events and alerts, the aggregate data in alert history 442 may be broken down according to event type, alert type, and/or other sub-categories.

As described further herein, alert rules 438 may be provided by churn reduction engine 410. Churn reduction engine 410 may be the same or function in a similar manner as churn reduction engine 316 described above. For example, churn reduction engine 410 may provide an initial instance of alert rules 438 to one or more detection and alerting devices, such as detection and alerting device 430. Subsequently, churn reduction engine 410 may generate new instances of alert rules 438 based on churn data 404 and alert history 442 to optimize the effectiveness of the alerts provided by event alerting engine 440 while reducing the likelihood that a user will disable detection and alerting device 430 from providing alerts in the future.

Churn reduction engine 410 may include one or more application programs, components, or services for implementing the features disclosed herein, including churn classification model 422, alert rules engine 412, and alert history engine 418. The various application programs, components or services of churn reduction engine 410 may be implemented on a cloud-based and/or central server system, such as driving alert management server system 302 as described above.

Churn classification model 422 may include one or more machine learning models and/or classifiers trained to generate churn classification 424 for a user based on alert history 442 for the user. Churn classification 424 may indicate the likelihood that a user will disable detection and alerting device 430 from providing alerts in the future. For example, churn classification 424 can include a letter grade, percentage, or other representation of the likelihood, probability, and/or confidence that a user will churn. While described herein as a machine learning model, other implementations of churn classification model 422 that embody correlations between alert rules and observed churn data can be used.

Churn classification model 422 may be trained to generate churn classification 424 from churn data 404. Churn data 404 may include a collection of data for a plurality of users who had enabled event alerts on a respective detection and alerting device to which they were associated. For example, each instance of churn data 404 may include a respective alert history for a user of the plurality of users, as described above in reference to alert history 442, as well as a label indicating whether or not the user churned-out by disabling their respective detection and alerting device from providing subsequent alerts. Additionally, or alternatively, each instance of churn data 404 may include the set of alert rules that were used to control the generation of the alerts in the alert history for a user. The data for each instance of churn data 404, as described above, may be used as features along with the labels to train churn classification model 422 using supervised learning. Based on the labeled alert history, churn classification model 422 can identify the features that are most predictive of whether a user will churn. Additionally, or alternatively, churn classification model 422 can assess the importance of each feature in predicting whether a user will churn.

Based on churn classification 424 for a user, alert rules engine 412 may generate modified alert rules 416. Modified alert rules 416 may include a new set of alert rules and/or one or more modifications to the existing set of alert rules for the user. Compared to an initial set of alert rules, modified alert rules 416 may cause event alerting engine 440 to generate fewer or more alerts, increase or decrease the frequency with which alerts are generated, change the type and/or timing of alerts, or the like based on the likelihood that a user will churn (e.g., as indicated by churn classification 424). For example, in the event that churn classification 424 indicates there is a high likelihood that a user will churn, alert rules engine 412 may generate modified alert rules 416 that cause fewer alerts to be generated in response to the detection of one or more types of driving events. By reducing the number and/or frequency of alerts, perceived device chattiness and/or user annoyance may be reduced, thereby reducing the likelihood that a user will disable future alerts. On the other hand, if churn classification 424 indicates that there is a low likelihood that a user will churn, alert rules engine 412 may generate modified alert rules 416 that cause more alerts to be generated in response to the detection of one or more types of driving events. Increasing the number and/or frequency of alerts may enable detection and alerting device 430 to provide more consistent feedback to the user, thereby improving the effectiveness of each alert provided by the device on changing the user's driving behaviors.

In some embodiments, alert rules engine 412 provides modified alert rules 416 to detection and alerting device 430 as alert rules 438 after a single execution of churn classification model 422 on alert history 442. Additionally, or alternatively, alert rules engine 412 may provide modified alert rules 416 to detection and alerting device 430 as alert rules 438 after one or more additional executions of churn classification model 422 on a synthetic version of alert history 442, such as synthetic alert history 420. Alert history engine 418 may generate synthetic alert history 420 by applying modified alert rules 416 to alert history 442.

Synthetic alert history 420 may include the subset of alerts in alert history 442 that would have been generated by event alerting engine 440 according to modified alert rules 416 while excluding the alerts in alert history 442 that would not have been generated based on modified alert rules 416. For example, take a first alert and a second alert in alert history 442 that were generated 5 minutes apart from each other for a first driving event and a second driving event based on an initial alert rule setting a minimum inter-alert time at 5 minutes. Applying modified alert rules 416 that set the minimum inter-alert time to 8 minutes would result in the second alert being excluded from synthetic alert history 420 because it would conflict with the new minimum inter-alert time.

Additionally, or alternatively, synthetic alert history 420 may include a set of synthetic alerts based on driving events in alert history 442 for which an alert was not generated. Continuing the previous example, assume that a third driving event was detected 4 minutes after the second alert was generated (i.e., 9 minutes after the first alert). Given the new minimum inter-alert time of 8 minutes, the second alert may still be excluded from synthetic alert history 420, but a synthetic alert may be added to synthetic alert history 420 for the third driving event because, in retrospect, modified alert rules 416 would have caused event alerting engine 440 to generate an alert for the third driving event. In this way, alert history engine 418 can use driving events included in alert history 442 to create a synthetic, or hypothetical, alert history based on modified alert rules 416.

Churn classification model 422 can then be executed on synthetic alert history 420 to generate a new instance of churn classification 424. The new instance of churn classification 424 generated from synthetic alert history 420 can be used by churn classification model 422 and/or alert rules engine 412 to confirm that modified alert rules 416 will result in event alerting engine 440 providing the maximum amount of feedback to the user without causing the user to churn. For example, alert rules engine 412 may compare the initial instance of churn classification 424 with a predefined minimum and/or maximum churn classification threshold. A churn classification below a predefined minimum churn classification threshold may indicate that a user receives too few alerts and is unlikely to churn. On the other hand, a churn classification above a predefined maximum churn classification threshold may indicate that the user receives too many alerts, and is therefore very likely to churn. Based on the comparison, alert rules engine 412 may generate modified alert rules 416 that are intended to cause more alerts to be generated, and therefore increase a subsequent churn classification, or to generate fewer alerts, and therefore decrease a subsequent churn classification.

Modified alert rules 416 may then be applied to alert history 442 to generate synthetic alert history 420. In turn, synthetic alert history 420 can be used by churn classification model 422 to generate a new instance of churn classification 424. The new instance of churn classification 424 may then be compared to the predefined minimum and/or maximum churn classification thresholds to determine if the new instance is above the predefined minimum churn classification threshold and/or below the predefined maximum churn classification threshold. In response to determining that the threshold criteria are not met, one or more subsequent iteration may be performed until a resulting instance of churn classification 424 meets the predefined churn threshold criteria. In response, the instance of modified alert rules 416 that was used to produce the resulting instance of churn classification 424 may be provided as alert rules 438 to event alerting engine 440.

In some embodiments, churn reduction engine 410 is used to modify alert rules 438 and/or generate a new set of alert rules 438 for detection and alerting device 430 on a periodic, semi-periodic, or on-demand basis. For example, after receiving a modified set of alert rules 438, event alerting engine 440 may proceed to generate alerts according to the modified set of alert rules 438 for a predefined amount of time and/or a predefined number drives. In so doing, event alerting engine 440 may continue to update alert history 442 as new alerts are generated. After the predefined amount of time and/or the predefined number of drives. Alert history 442, including the new alerts generated since receiving the modified set of alert rules 438, may then be provided to churn reduction engine 410 for generation of a new set of alert rules 438.

While the various application programs, components, or services of churn reduction engine 410 are described above as being implemented on a cloud-based and/or central server system, such as driving alert management server system 302, it should be understood that one or more components of churn reduction engine 410 may additionally, or alternatively, be implemented on and/or executed by detection and alerting device. For example, once trained on churn data 404, an instance of churn classification model 422 may be provided to detection and alerting device 430 along with, or in place of, alert rules 438. Subsequently, the instance of churn classification model 422 on detection and alerting device 430 can be executed on alert history 442 to generate churn classification 424, from which an instance of alert rules engine 412 executing on detection and alerting device 430 can generate an optimized set of alert rules 438.

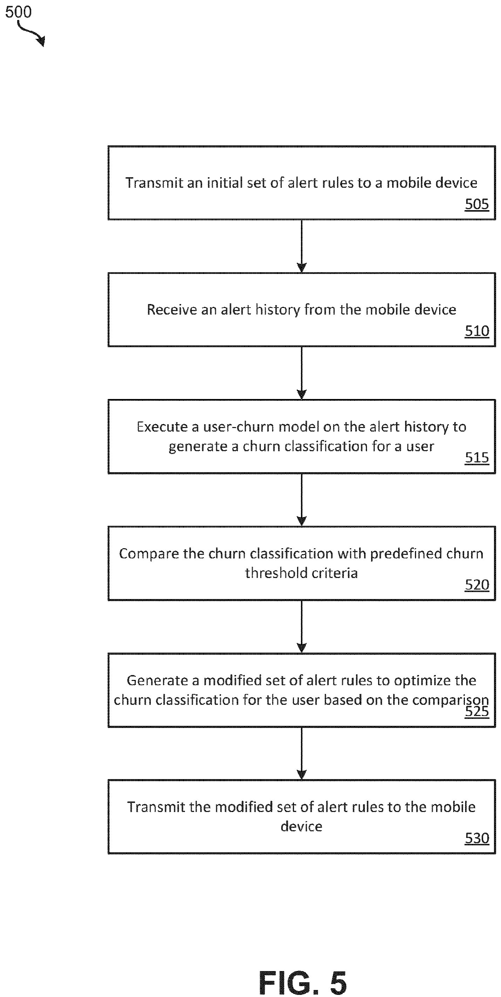

FIG. 5 is a flow diagram of an example method 500 for providing optimized driving alert rules to a mobile device, according to at least one embodiment. One or more blocks of method 500 may be performed by a driving alert management server system, as described above. Additionally, or alternatively, one or more blocks may be performed by a mobile device, and/or using data obtained from a mobile device, such as a mobile phone, as described above.

Method 500 is illustrated as a logical flow diagram, each operation of which represents a sequence of operations that can be implemented in hardware, computer instructions, or a combination thereof. In the context of computer instructions, the operations represent computer-executable instructions stored on one or more non-transitory computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be omitted or combined in any order and/or in parallel to implement the processes.

Some or all of method 500 (or any other methods described herein, including method 500, or variations, and/or combinations thereof) may be performed under the control of one or more computer systems configured with executable instructions and may be implemented as code (e.g., executable instructions, one or more computer programs, or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory.

At block 505, an initial set of alert rules are transmitted to a mobile device. The mobile device may be associated with a user. The mobile device and/or the user may be associated with a user account managed by a driving alert management server system, as described above. For example, the user may be identified as a driver on an account associated with an insurance policy and the mobile device may be identified in the records for the account as a device owned by the user. In some embodiments, the initial set of alert rules are transmitted to the mobile device from the driving alert management server system.

As described above, the initial set of alert rules may cause an application executing on the mobile device to provide alerts to the user in response to detecting the occurrence of one or more types of driving events. In response to detecting a driving event, the initial set of alert rules may control whether, when, and/or how the mobile device, and/or the application, provides an alert to the user. For example, the initial set of alert rules may include a minimum alert interval that causes the application to wait a predefined amount of time after providing an alert to the user before providing a subsequent alert to the user. As another example, the initial set of alert rules may include a minimum event severity threshold that limits the application to providing alerts to the user for detected driving events that have a severity exceeding the minimum event severity threshold. Additionally, or alternatively, the initial set of alert rules may cause the application to generate specific types of alerts in response to detecting an occurrence of a driving event.

At block 510, an alert history is received from the mobile device. The alert history may include information about alerts provided by the mobile device and/or the application in accordance with the initial set of alert rules in response to the occurrence of one or more types of driving events detected while the user is driving a vehicle. As described above, the one or more types of driving events may be indicative of unsafe driving behaviors, such as hard braking, harsh acceleration, speeding, or the like. The occurrences of the one or more types of driving events may be detected from raw and/or processed sensor data from one or more electronic devices disposed in a vehicle during a drive, such as one or more vehicle sensors, a mobile device associated with the user, or the like.

In some embodiments, the history of alerts includes individual instances of alerts provided to the user and/or summary statistics for alerts provided to the user over a predefined period of time. For example, the information for an individual alert may include: a location of the mobile device when the alert was provided; a time when the alert was provided; a type of the alert; a type of the driving event that was detected; a severity of the detected driving event; or the like. As another example, the history of alerts may include an indication of the average amount of time between alerts provided to the user and/or an average number of alerts provided to the user during a predefined period of time (e.g., during a single drive, during a day, during a week, or the like).

At block 515, a user-churn model is executed on the alert history to generate a churn classification for the user. The churn classification for a user may represent the likelihood that the user will disable the detection and/or alerting of future driving events. For example, the churn classification may be a percentage, a numerical score, a category, or the like. The user-churn model may be a user-churn machine learning model trained to generate the churn classification for the user from the history of alerts provided to the user. For example, a machine learning model may be trained on a training dataset comprising alert histories for a plurality of users who have and have not churned. Each alert history of the training dataset may include a label indicating whether the associated user churned or not. Based on the labels, the machine learning model can be trained to identify features in alert histories that predict the labels and/or the importance, or weight, of each feature on predicting the label. Once trained, the machine learning model can executed on the identified features extracted from another user's alert history to generate a churn classification for the other user.

At block 520, the churn classification is compared with predefined churn threshold criteria. The predefined churn threshold criteria may include upper and/or lower bounds for acceptable churn classifications. Upper bounds may represent the highest acceptable likelihood that a user will churn. Upper bounds may be used to identify the set of alert rules for a user that will result in the user receiving a maximum number of alerts without causing the user to disable future alerts. Lower bounds may represent the lowest acceptable likelihood that a user will churn. Compared to upper bounds, lower bounds may be used to identify alert rules for a user that result in too few alerts being provided to the user. In combination, the predefined churn threshold criteria may be used to identify a set of alert rules that result in an optimal number and/or frequency of alerts that will help motivate the user to modify their driving behavior without being perceived as an annoyance and/or causing the user to disable future alerts.

At block 525, a modified set of alert rules are generated to optimize the churn classification for the user based on the comparison. The modified set of alert rules may be generated based on the initial set of alert rules. For example, one or more rules in the initial set of alert rules may be adjusted to produce the modified set of alert rules. Compared to the initial set of alert rules, the modified set of alert rules may cause the mobile device and/or application to provide fewer or more alerts, increase or decrease the severity and/or aggressiveness of alerts, or the like. For example, in response to determining that the churn classification is less than a minimum churn threshold, the new set of alert rules may cause the mobile device to provide alerts to the user more frequently compared to the initial set of alert rules. As another example, in response to determining that the churn classification is greater than a maximum churn threshold, the new set of alert rules may cause the mobile device to provide alerts to the user less frequently compared to the initial set of alert rules. In some embodiments, generating the modified set of alert rules includes iteratively generating a modified set of alert rules, from which an updated churn classification, and/or an updated likelihood that the user will disable future alerts caused by the modified set of alert rules, may be generated and compared to the predefined churn threshold criteria until a final churn classification from a resulting set of alert rules meets the predefined churn threshold criteria.

At block 530, the modified set of alert rules are transmitted to the mobile device. Subsequently, the mobile device, and/or an application executing on the mobile device, may begin apply the modified set of alert rules to subsequently detected occurrences of the one or more driving events. In some embodiments, method 500 may be repeated after the modified set of alert rules are transmitted to the mobile device. For example, in response to detecting driving events and providing alerts according to the modified set of alert rules for a predefined period of time, a new alert history for the predefined period of time may be received again at block 510 and a subsequent set of alert rules generated at 525. Subsequent iterations may be performed to provide sets of alert rules that are updated for a user's most recent driving trends. For example, as a user's driving abilities improve, and the instances of unsafe driving events decrease, the number of alerts provided to the user may also decrease. As such, a modified set of alert rules can be generated based on the user's improved driving history that will result in more alerts.

It should be appreciated that the specific steps illustrated in FIG. 5 provide a particular method for providing optimized driving alert rules to a mobile device according to an embodiment of the present invention. Other sequences of steps may also be performed according to alternative embodiments. For example, alternative embodiments of the present invention may perform the steps outlined above in a different order. Moreover, the individual steps illustrated in FIG. 5 may include multiple sub-steps that may be performed in various sequences as appropriate to the individual step. Furthermore, additional steps may be added or removed depending on the particular applications. One of ordinary skill in the art would recognize many variations, modifications, and alternatives.

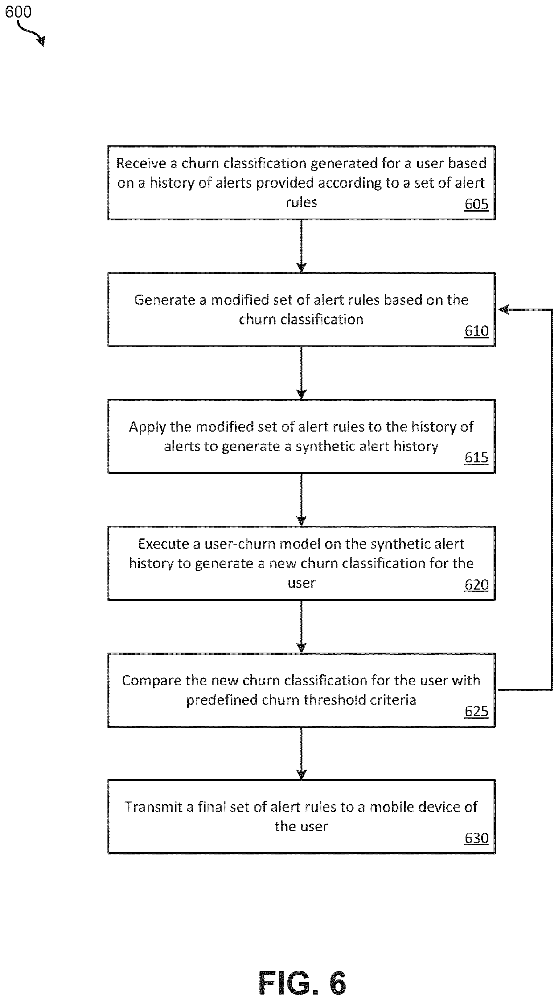

FIG. 6 is a flow diagram of an example method 600 for optimizing driving event alert rules, according to at least one embodiment. One or more blocks of method 600 may be performed by a driving alert management server system, as described above.

At block 605, a churn classification is generated for a user based on a history of alerts provided according to a set of alert rules. As described above, the alerts in the history of alerts may be provided to the user by a mobile device, and/or an application executing on the mobile device, in response to detecting the occurrence of one or more types of driving events. The churn classification may be generated in the same or similar manner as described above in relation to block 515 of method 500. For example, a trained machine learning model may be executed on the history of alerts provided to the user.

At block 610, a modified set of alert rules are generated based on the churn classification. The modified set of alert rules may be generated in the same or similar manner as described above in relation to block 520 and block 525 of method 500. For example, in response to comparing the churn classification with predefined churn threshold criteria, an initial set of alert rules may be modified. As further described above, the modifications may be intended to increase and/or decrease the frequency at which alerts are provided to a user in response to detecting occurrences of driving events.

At block 615, the modified set of alert rules are applied to the history of alerts to generate a synthetic alert history. As described above in relation to alert history engine 418, the synthetic alert history may include the subset of alerts from the actual alert history that would have been generated according to the modified alert rules while excluding alerts that would not have been generated based on the modified alert rules. Additionally, or alternatively, the synthetic alert history may include a set of synthetic alerts based on driving events in the actual alert history for which an alert was not generated.

At block 620, a user-churn model is executed on the synthetic alert history to generate a new churn classification for the user. The user-chum model may be the same or a similar machine learning model as used to generate the churn classification received at block 605.

At block 625, the new churn classification is compared with predefined churn threshold criteria. The predefined churn threshold criteria may be the same or similar criteria as applied in block 610 to generate the modified set of alert rules. For example, comparing the new churn classification with the predefined churn threshold criteria may include determining whether the new churn threshold criteria is below a maximum churn classification threshold and/or above a minimum churn classification threshold. Additionally, or alternatively, the new churn classification may be compared with the initial churn classification to predict how, and/or to what extent, the modified set of alert rules would affect a future churn classification for the user.

In response to determining that the new churn classification does not meet the predefined churn threshold criteria, method 600 may return to block 610 to generate a subsequent set of alert rules based on the new churn classification. Block 610 through block 625 may be repeated one or more times until a final set of alert rules are generated that result in a new churn classification that meets the predefined churn threshold criteria. At block 630, a final set of alert rules is transmitted to a mobile device of the user in response to determining that a new churn classification meets the predefined churn threshold criteria at block 625.

It should be appreciated that the specific steps illustrated in FIG. 6 provide a particular method for optimizing driving event alert rules according to an embodiment of the present invention. Other sequences of steps may also be performed according to alternative embodiments. For example, alternative embodiments of the present invention may perform the steps outlined above in a different order. Moreover, the individual steps illustrated in FIG. 6 may include multiple sub-steps that may be performed in various sequences as appropriate to the individual step. Furthermore, additional steps may be added or removed depending on the particular applications. One of ordinary skill in the art would recognize many variations, modifications, and alternatives.

While examples and features of disclosed principles are described herein, modifications, adaptations, and other implementations are possible without departing from the spirit and scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

It is also understood that the examples and embodiments described herein are for illustrative purposes only and that various modifications or changes in light thereof will be suggested to persons skilled in the art and are to be included within the spirit and purview of this application and scope of the appended claims, which follow.

## Claims

1. A method comprising:
transmitting, by a driving alert management server system, an initial set of alert rules to a driver safety application executing on a computing device, wherein the initial set of alert rules cause the driver safety application to provide alerts to a user in response to detecting occurrences of one or more types of driving events while the computing device is disposed in a vehicle;
obtaining, by the driving alert management server system, an alert history for the driver safety application, the alert history comprising information about a set of alerts provided to the user in accordance with the initial set of alert rules;
executing, by the driving alert management server system, a user-churn machine learning model on the alert history to generate a likelihood that the user will disable future alerts caused by the initial set of alert rules;
comparing, by the driving alert management server system, the likelihood with predefined churn threshold criteria;
generating, by the driving alert management server system, a new set of alert rules to optimize the likelihood by modifying the initial set of alert rules based on comparing the likelihood with the predefined churn threshold criteria; and
transmitting, by the driving alert management server system, the new set of alert rules to the driver safety application.

2. The method of claim 1, wherein generating the new set of alert rules to optimize the likelihood comprises iteratively:
generating a modified set of alert rules based on the initial set of alert rules or a previous iteration of the modified set of alert rules;
generating an updated likelihood that the user will disable future alerts caused by the modified set of alert rules; and
comparing the updated likelihood with the predefined churn threshold criteria.

3. The method of claim 2, wherein generating the updated likelihood comprises:
generating a synthetic alert history that includes a subset of alerts from the alert history and excludes alerts from the alert history that do not conform to the modified set of alert rules; and
executing the user-churn machine learning model on the synthetic alert history to generate the updated likelihood.

4. The method of claim 2, wherein iteratively generating the modified set of alert rules comprises:
setting a lower bound based on the initial set of alert rules or the previous iteration of the modified set of alert rules;
setting an upper bound based on a predefined set of alert rules; and
identifying the modified set of alert rules from a midpoint between the lower bound and the upper bound.

5. The method of claim 1, wherein the predefined churn threshold criteria comprise a minimum churn threshold and wherein, in response to determining that the likelihood is less than the minimum churn threshold, the new set of alert rules cause the driver safety application to provide alerts to the user more frequently compared to the initial set of alert rules.

6. The method of claim 1, wherein the predefined churn threshold criteria comprise a maximum churn threshold and wherein, in response to determining that the likelihood is greater than the maximum churn threshold, the new set of alert rules cause the driver safety application to provide alerts to the user less frequently compared to the initial set of alert rules.

7. The method of claim 1, wherein the initial set of alert rules includes a minimum alert interval that causes the driver safety application to wait a predefined amount of time after providing an alert to the user before providing a subsequent alert to the user and generating the new set of alert rules comprises increasing or decreasing the predefined amount of time.

8. The method of claim 1, wherein the initial set of alert rules includes a minimum event severity threshold that limits the driver safety application to providing alerts to the user for detected driving events that have a severity exceeding the minimum event severity threshold and generating the new set of alert rules comprises increasing or decreasing the minimum event severity threshold.

9. The method of claim 1, wherein the initial set of alert rules cause the driver safety application to generate the alerts as a first alert type and the new set of alert rules cause the driver safety application to generate future alerts as a second alert type.

10. The method of claim 1, wherein the information for an alert in the set of alerts provided to the user in response to a driving event comprises at least one of: a location of the computing device when the alert was provided; a time when the alert was provided; a type of the alert; a type of the driving event; or a severity of the driving event.

11. The method of claim 1, further comprising:
receiving a first collection of alert histories for a first plurality of users who disabled their respective instances of the driver safety application;
receiving a second collection of alert histories for a second plurality of users who have not disabled their respective instances of the driver safety application; and
training the user-churn machine learning model using the first collection of alert histories and the second collection of alert histories.

12. The method of claim 1, wherein the one or more types of driving events comprises at least one of: a hard braking event type; a harsh acceleration event type; a speeding event type; a cornering event type; or a distracted driving event type.

13. A system for optimized driving alerts, comprising:
a driving alert management server system, wherein the driving alert management server system comprises:
a memory; and
one or more hardware processors that, when executing computer executable instructions stored in the memory, are configured to:
transmit an initial set of alert rules to a driver safety application executing on a computing device, wherein the initial set of alert rules cause the driver safety application to provide alerts to a user in response to detecting occurrences of one or more types of driving events;
obtain an alert history for the driver safety application, the alert history comprising information about a set of alerts provided to the user in accordance with the initial set of alert rules;
execute a user-churn machine learning model on the alert history to generate a likelihood that the user will disable future alerts caused by the initial set of alert rules;
compare the likelihood with predefined churn threshold criteria;
generate a new set of alert rules to optimize the likelihood by modifying the initial set of alert rules based on comparing the likelihood with the predefined churn threshold criteria; and
transmit the new set of alert rules to the driver safety application.

14. The system for optimized driving alerts of claim 13, further comprising:
a plurality of computing devices comprising the computing device, wherein each computing device executes a respective instance of the driver safety application and is associated in a datastore managed by the driving alert management server system with a respective user of a plurality of users, and the plurality of computing devices comprises at least one of: a vehicle's computer; a smartphone; or a special purpose computer installed within a vehicle.

15. One or more non-transitory computer-readable storage media storing instructions that, upon execution by one or more processors of a driving alert management server system, cause the driving alert management server system to perform operations comprising:
transmitting an initial set of alert rules to a driver safety application executing on computing device, wherein the initial set of alert rules cause the driver safety application to provide alerts to a user in response to detecting occurrences of one or more types of driving events;
obtaining an alert history for the driver safety application, the alert history comprising information about a set of alerts provided to the user in accordance with the initial set of alert rules;
executing a user-churn machine learning model on the alert history to generate a likelihood that the user will disable future alerts caused by the initial set of alert rules;
comparing the likelihood with predefined churn threshold criteria;
generating a new set of alert rules to optimize the likelihood by modifying the initial set of alert rules based on comparing the likelihood with the predefined churn threshold criteria; and
transmitting the new set of alert rules to the driver safety application.
